# EUROPÄISCHE PATENTANMELDUNG

(11) **EP 1 324 050 A2**
(43) Veröffentlichungstag der Anmeldung: **02.07.2003**
(21) Anmeldenummer: 02102693.5
(22) Anmeldetag: 06.12.2002
(51) Int. Cl.: G01P 3/488, G01D 5/16

(54) **Anordnung zum Detektieren der Bewegung eines Encoders**

(30) Priorität: 08.12.2001 DE 10160450
(71) Anmelder: Philips Intellectual Property & Standards GmbH, 20099 Hamburg (DE); Koninklijke Philips Electronics N.V., 5621 BA Eindhoven (NL)
(72) Erfinder: Buchhold, Reinhard, Dr., 52088, Aachen (DE); Döscher, Michael, Dr., 52088, Aachen (DE)
(74) Vertreter: Volmer, Georg, Dipl.-Ing.

(57) **Zusammenfassung**

Beschrieben wird eine Anordnung zum Detektieren der Bewegung eines Encoders, der entlang einer Hauptfläche, die zumindest im wesentlichen durch eine zweite, in Bewegungsrichtung des Encoders ausgerichtete räumliche Koordinate sowie eine zumindest im wesentlichen senkrecht zur Bewegungsrichtung des Encoders ausgerichtete erste räumliche Koordinate aufgespannt ist, angeordnete, magnetisch wirksame Bereiche aufweist, die entlang der zweiten räumlichen Koordinate in vorgegebener Folge unterteilt sind, mit einem in Richtung einer zumindest im wesentlichen senkrecht zur Hauptfläche des Encoders ausgerichteten dritten räumlichen Koordinate vor der Hauptfläche des Encoders angeordneten magnetoresistiven Sensorelement und einer magnetfelderzeugenden Vorrichtung zum Erzeugen eines Magnetfeldes, welches das magnetoresistive Sensorelement mit Feldlinien durchsetzt, die zumindest im wesentlichen in einer durch die erste und die dritte räumliche Koordinate aufgespannten Ebene ausgerichtet sind, wobei die Anordnung eingerichtet ist zum Erzeugen einer von der Position des Encoders gegenüber dem magnetoresistiven Sensorelement und der magnetfelderzeugenden Vorrichtung bestimmten Ablenkung der Feldlinien des von der magnetfelderzeugenden Vorrichtung erzeugten Magnetfeldes in Richtung der zweiten räumlichen Koordinate mit einer durch die vorgegebene Folge der magnetisch wirksamen Bereiche bestimmten periodischen Wiederholung und zum Abgeben eines vom magnetoresistiven Sensorelement aufgrund der Beeinflussung durch diese Ablenkung der Feldlinien hervorgerufenen, mit der genannten periodischen Wiederholung steigende und fallende Signalflanken aufweisenden Ausgangssignals, und wobei die Anordnung weiterhin eingerichtet ist zum Erzeugen einer ebenfalls von der Position des Encoders bestimmten Ablenkung der Feldlinien des Magnetfeldes auch in Richtung der ersten räumlichen Koordinate in der genannten periodischen Wiederholung, mit einer Signalverarbeitungsschaltung zum Detektieren der Steigungen aufeinanderfolgender Signalflanken im Ausgangssignal und Abgeben eines Bewegungsrichtungssignals in Abhängigkeit von den Werten und/oder der Aufeinanderfolge der Werte der Steigungen aufeinanderfolgender Signalflanken.

## Beschreibung

Die Erfindung betrifft eine Anordnung zum Detektieren der Bewegung eines Encoders.

Aus der WO 90/06517 A1 ist ein Gerät zur Verwendung in elektronisch gesteuerten Benzineinspritzsystemen bekannt, welches unter Benutzung eines einzelnen HallSensors die Geschwindigkeit, Winkellage und Bewegungsrichtung einer Drehbewegung erfaßt. Das Gerät umfaßt ein fest mit der Nockenwelle eines Verbrennungsmotors verbundenes und mit dieser drehbares, scheibenförmiges Element. Das scheibenförmige Element enthält eine Mehrzahl an seinem Umfang angeordneter Zonen von im wesentlichen gleicher Länge, von denen jede einen ersten und einen zweiten Bereich aufweist. Ein erster Anteil der Zonen zeigt erste und zweite Bereiche, die in ihrer Länge deutlich von den ersten und den zweiten Bereichen eines zweiten Anteils der Zonen abweichen. Dementsprechend liefert der Sensor ein Signal, dessen Frequenz unmittelbar in Bezug zu der augenblicklichen Geschwindigkeit des scheibenförmigen Elements steht, dessen Impulsbreite jedoch in Abhängigkeit von den ersten und zweiten Anteilen der Zonen wechselt. Ein programmgesteuerter Mikroprozessor erfaßt die augenblickliche Winkellage und Richtung der Drehbewegung des scheibenförmigen Elements durch Erfassung der Lage des zweiten Anteils der Zonen und der Reihenfolge, in welcher sie empfangen werden.

Eine solche Anordnung erfordert eine sehr aufwendige Konstruktion für das scheibenförmige Element. Außerdem ist eine eindeutige Bestimmung der Geschwindigkeit, Winkellage und Bewegungsrichtung der zu detektierenden Drehbewegung erst nach etwa einer vollständigen Umdrehung des scheibenförmigen Elements möglich.

Die Erfindung hat die Aufgabe, eine Anordnung zum Detektieren der Bewegung eines Encoders zu schaffen, die auf einfache, schnelle und genaue Weise die Messung sowohl der Geschwindigkeit als auch die Erfassung der Bewegungsrichtung dieses Encoders gestattet.

Erfindungsgemäß wird diese Aufgabe gelöst durch eine Anordnung zum Detektieren der Bewegung eines Encoders, der entlang einer Hauptfläche, die zumindest im wesentlichen durch eine zweite, in Bewegungsrichtung des Encoders ausgerichtete räumliche Koordinate sowie eine zumindest im wesentlichen senkrecht zur Bewegungsrichtung des Encoders ausgerichtete erste räumliche Koordinate aufgespannt ist, angeordnete, magnetisch wirksame Bereiche aufweist, die entlang der zweiten räumlichen Koordinate in vorgegebener Folge unterteilt sind, mit einem in Richtung einer zumindest im wesentlichen senkrecht zur Hauptfläche des Encoders ausgerichteten dritten räumlichen Koordinate vor der Hauptfläche des Encoders angeordneten magnetoresistiven Sensorelement und einer magnetfelderzeugenden Vorrichtung zum Erzeugen eines Magnetfeldes, welches das magnetoresistive Sensorelement mit Feldlinien durchsetzt, die zumindest im wesentlichen in einer durch die erste und die dritte räumliche Koordinate aufgespannten Ebene ausgerichtet sind, wobei die Anordnung eingerichtet ist zum Erzeugen einer von der Position des Encoders gegenüber dem magnetoresistiven Sensorelement und der magnetfelderzeugenden Vorrichtung bestimmten Ablenkung der Feldlinien des von der magnetfelderzeugenden Vorrichtung erzeugten Magnetfeldes in Richtung der zweiten räumlichen Koordinate mit einer durch die vorgegebene Folge der magnetisch wirksamen Bereiche bestimmten periodischen Wiederholung und zum Abgeben eines vom magnetoresistiven Sensorelement aufgrund der Beeinflussung durch diese Ablenkung der Feldlinien hervorgerufenen, mit der genannten periodischen Wiederholung steigende und fallende Signalflanken aufweisenden Ausgangssignals, und wobei die Anordnung weiterhin eingerichtet ist zum Erzeugen einer ebenfalls von der Position des Encoders bestimmten Ablenkung der Feldlinien des Magnetfeldes auch in Richtung der ersten räumlichen Koordinate in der genannten periodischen Wiederholung, mit einer Signalverarbeitungsschaltung zum Detektieren der Steigungen aufeinanderfolgender Signalflanken im Ausgangssignal und Abgeben eines Bewegungsrichtungssignals in Abhängigkeit von den Werten und/oder der Aufeinanderfolge der Werte der Steigungen aufeinanderfolgender Signalflanken.

Der Erfindung liegt die Erkenntnis zugrunde, daß die Kennlinie eines magnetoresistiven Sensorelements, welche die Abhängigkeit einer von diesem abgegebenen Ausgangsspannung von der magnetischen Feldstärke einer durch die Ablenkung der Feldlinien in Bewegungsrichtung des Encoders auftretenden Komponente des von der magnetfelderzeugenden Vorrichtung erzeugten Magnetfeldes beschreibt, eine von der Ausrichtung der Feldlinien des Magnetfeldes auch in Richtung der ersten räumlichen Koordinate, d.h. im wesentlichen senkrecht zur Bewegungsrichtung des Encoders, abhängige Steigung aufweist. Je geringer die Ausrichtung der Feldlinien des Magnetfeldes auch in Richtung der ersten räumlichen Koordinate, also im wesentlichen senkrecht zur Bewegungsrichtung des Encoders, d.h. je kleiner die Komponente des Magnetfeldes in Richtung dieser ersten räumlichen Koordinate ist, desto größer ist die Steigung der Kennlinie im Bereich ihres Nullpunktes, der durch Verschwinden der durch die Ablenkung der Feldlinien in Bewegungsrichtung des Encoders auftretenden Komponente des Magnetfeldes und Nulldurchgang der vom magnetoresistiven Sensorelement abgegebenen Ausgangsspannung bestimmt ist. Das bedeutet, daß sich bei einer Bewegung des Encoders entlang seiner Bewegungsrichtung, d.h. in Richtung der zweiten räumlichen Koordinate, dort besonders steile Änderungen der vom magnetoresistiven Sensorelement abgegebenen Ausgangsspannung ergeben, wo die Komponente des Magnetfeldes in Richtung der ersten räumlichen Koordinate klein ist, wohingegen die Änderungen der vom magnetoresistiven Sensorelement abgegebenen Ausgangsspannung entlang der Bewegungsrichtung des Encoders flacher verlaufen, wo die Komponente des Magnetfeldes in Richtung der ersten räumlichen Koordinate größer ist. Dies bedeutet eine nichtlineare Änderung der Kennlinie entlang der Bewegungsrichtung des Encoders, die sich in der Weise auswirkt, daß bei einer Bewegung des Encoders in Abhängigkeit von der Bewegungsrichtung die ansteigenden Signalflanken der vom magnetoresistiven Sensorelement abgegebenen Ausgangsspannung eine andere Steigung aufweisen als die abfallenden Signalflanken dieser Ausgangsspannung. Durch Auswertung dieser Steigungen aufeinanderfolgender, d.h. mit der genannten periodischen Wiederholung steigender und fallender, Signalflanken der Ausgangsspannung kann dann unmittelbar ein die Bewegungsrichtung anzeigendes Bewegungsrichtungssignal gewonnen werden.

Die entlang der Hauptfläche des Encoders angeordneten, entlang der zweiten räumlichen Koordinate in vorgegebener Folge unterteilten, magnetisch wirksamen Bereiche können dabei in unterschiedlicher Weise ausgestaltet sein, beispielsweise als Bereiche unterschiedlicher Magnetisierung eines entlang der Hauptfläche des Encoders angeordneten, magnetisierten Werkstoffs oder als entlang der Bewegungsrichtung abwechselnd zahnartig vor- bzw. rückspringende Ausformungen in einem entlang der Hauptfläche des Encoders angeordneten, magnetisierbaren Werkstoff.

Die Erfindung ermöglicht so in einfacher Weise eine Bestimmung von Betrag und Richtung der Geschwindigkeit einer Bewegung des Encoders gegenüber dem magnetoresistiven Sensorelement. Vorteilhaft gestaltet sich dabei insbesondere, daß für diese Bestimmung lediglich ein konventioneller, sogenannter einspuriger Encoder, der nur eine entlang seiner Hauptfläche in der Bewegungsrichtung angeordnete Reihe bzw. Spur magnetisch wirksamer Bereiche aufweist, und nur ein magnetoresistives Sensorelement benötigt werden. Damit lassen sich die Vorteile von solchen insbesondere als vollständige Wheatstone-Brücken ausgebildeten magnetoresistiven Sensorelementen wie z.B. die Temperaturkompensation nutzen und der Nachteil räumlcher Justagen mehrerer Sensorelemente zueinander vermeiden.

Ein Ausführungsbeispiel der Erfindung ist in der Zeichnung dargestellt und wird im Nachfolgenden näher beschrieben. Es zeigen
- Fig. 1: eine beispielhafte Anordnung zum Detektieren der Bewegung eines zahnradförmigen Encoders in grob schematischer Darstellung,
- Fig. 2: eine räumliche Anordnung eines magnetoresistiven Sensorelements mit daran angeordnetem Arbeitsmagneten als magnetfelderzeugender Vorrichtung in schematischer Darstellung,
- Fig. 3: eine schematische Darstellung der Ablenkung der Feldlinien des Magnetfeldes in Richtung der ersten räumlichen Koordinate quer zur Bewegungsrichtung des Encoders und deren Auswirkung auf die Kennlinie des magnetoresistiven Sensorelements,
- Fig. 4: eine schematische Darstellung der durch die Ablenkung der Feldlinien des Magnetfeldes in Richtung der ersten räumlichen Koordinate quer zur Bewegungsrichtung des Encoders mit dessen Bewegung hervorgerufenen Änderungen der Komponenten des Magnetfeldes in Richtung der ersten räumlichen Koordinate quer zur Bewegungsrichtung des Encoders sowie in Richtung der zweiten räumlichen Koordinate in Bewegungsrichtung des Encoders und deren Auswirkung auf das Ausgangssignal des magnetoresistiven Sensorelements,
- Fig. 5: eine beispielhafte Darstellung eines Frequenzspektrums des Ausgangssignals einer erfindungsgemäßen Anordnung,
- Fig. 6: eine beispielhafte Darstellung eines Ausgangssignals einer erfindungsgemäßen Anordnung für eine Bewegung des Encoders in einer ersten Bewegungsrichtung,
- Fig. 7: eine beispielhafte Darstellung eines Ausgangssignals einer erfindungsgemäßen Anordnung für eine Bewegung des Encoders in einer zweiten Bewegungsrichtung und
- Fig. 8: ein Ausführungsbeispiel einer Signalverarbeitungsschaltung in schematischer Darstellung.

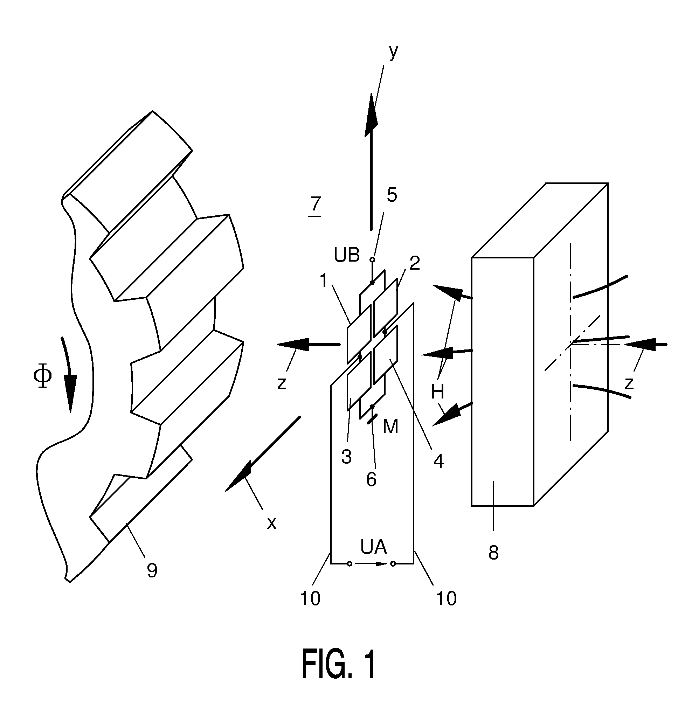

In Fig. 1 ist eine beispielhafte Ausführungsform einer nach der Erfindung ausgebildeten Anordnung zum Detektieren der Bewegung eines Encoders in grob schematischer Darstellung wiedergegeben. Der Encoder ist hier als Zahnrad 9 mit einem sich entlang dessen zylindrischer Mantelfläche, welche die Hauptfläche des Encoders darstellt, sich erstreckenden, magnetisierbaren, ferromagnetischen Werkstoff, z.B. Eisen, ausgebildet. Die entlang der Hauptfläche des Encoders 9 angeordneten, magnetisch wirksamen Bereiche sind dabei als entlang einer durch eine in Umfangsrichtung des Encoders 9, d.h. in seiner Bewegungsrichtung, ausgerichtete Bewegungskoordinate Φ des rotierenden Encoders 9 abwechselnd in vorgegebener Folge unterteilte, zahnartig vor- bzw. rückspringende Ausformungen in dem entlang der Hauptfläche des Encoders 9 angeordneten, magnetisierbaren Werkstoff ausgebildet. Die Anordnung gemäß dem hier gezeigten Ausführungsbeispiel ist zur Messung der Drehgeschwindigkeit des rotierenden Encoders 9, der auch als Bewegungsgeberelement bezeichnet werden kann, vorgesehen.

In der Anordnung nach Fig. 1 ist vor der Mantelfläche des Encoders 9, d.h. vor seiner Hauptfläche, ein magnetoresistives Sensorelement 7 angeordnet. Dieses enthält vier Brükkenzweige 1, 2, 3, 4, die in an sich bekannter Art je einen magnetoresistiven Widerstand, der beispielsweise als in Mäanderform auf Siliziumsubstrat angeordneter Permalloy-Streifen ausgebildet ist, umfassen und als Wheatstone-Brücke verschaltet sind. Diese Wheatstone-Brücke ist zwischen einem ersten Speisespannungsanschluß 5, an den im Betrieb ein erstes Speisespannungspotential UB angelegt wird, und einem zweiten Speisespannungsanschluß 6, an den im Betrieb ein zweites Speisespannungspotential M, vorzugsweise Massepotential, angelegt wird, angeordnet. Im gezeigten Beispiel ist das Sensorelement in einer durch eine als x-Koordinatenachse bezeichnete erste räumliche Koordinate und eine als y-Koordinatenachse bezeichnete zweite räumliche Koordinate eines kartesischen Koordinatensystems aufgespannten Ebene flächig angeordnet, zu welcher Ebene eine als z-Koordinatenachse bezeichnete, dritte räumliche Koordinate senkrecht steht. Dieses magnetoresistive Sensorelement ist insgesamt mit dem Bezugszeichen 7 bezeichnet.

Am Sensorelement 7 ist weiterhin ein als Arbeitsmagnet 8 bezeichneter, quaderförmiger Permanentmagnet montiert. Dieser Arbeitsmagnet 8 ist in einer praktischen Ausführung bevorzugt auf die Rückseite des Sensorelements 7 bzw. eines das Sensorelement 7 umgebenden Gehäuses geklebt, so daß das Sensorelement 7 von einem Magnetfeld H des Arbeitsmagneten 8 durchsetzt wird. Die Hauptrichtung der Feldlinien dieses Magnetfeldes H verläuft entlang der z-Koordinatenachse.

Das magnetoresistive Sensorelement 7 weist eine Meßrichtung entlang der y-Koordinatenachse auf. Es ist entlang dieser Meßrichtung gegenüber der Polarität und der Feldstärke des Magnetfeldes H des Arbeitsmagneten 8 empfindlich und zum Abgeben eines Meßsignals in Abhängigkeit von einer in der Meßrichtung gemessenen, als Meßfeld bezeichneten Feldkomponente dieses Magnetfeldes H ausgebildet. Das Meßsignal ist in Fig. 1 als zwischen zwei Abgriffen 10 der Wheatstone-Brücke anliegende Ausgangsspannung UA eingezeichnet.

Zur Messung der Drehgeschwindigkeit des rotierenden Bewegungsgeberelements 9 mit dem vorbeschriebenen Sensorelement 7 ist somit das rotierende Bewegungsgeberelement 9 in Richtung der z-Koordinatenachse vor dem Sensorelement 7 positioniert, mit zahnradartig ausgeformtem, ferromagnetischem Material ausgebildet und rotiert im Betrieb in Richtung der Bewegungskoordinate Φ, was entlang der Bewegungskoordinate Φ des Bewegungsgeberelements 9 zu einer mit dem Abstand der Zähne der zahnradartigen Ausformungen des Bewegungsgeberelements 9 periodisch auftretenden Verformung der Feldlinien des Magnetfelds H des Arbeitsmagneten 8 in der in Richtung der y-Koordinatenachse liegenden Meßrichtung des Sensorelements 7 führt. Die Feldkomponente des Magnetfelds H in der in Richtung der y-Koordinatenachse liegenden Meßrichtung wird dabei als Meßfeld bezeichnet. Durch das Meßfeld wird im Sensorelement 7 ein von dieser Bewegungskoordinate Φ des Bewegungsgeberelements 9 abhängiges, über der Bewegungskoordinate Φ vorzugsweise wenigstens nahezu sinusförmiges Ausgangssignal UA erzeugt.

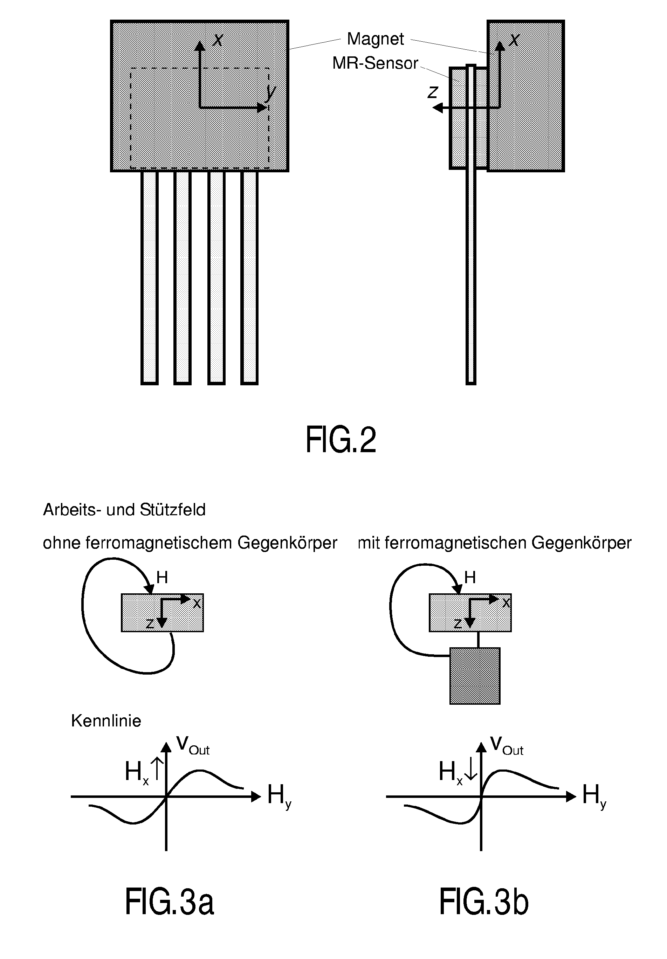

In Fig. 2 ist ein Beispiel für eine räumliche Anordnung eines magnetoresistiven Sensorelements 7 - MR-Sensor - mit daran angeordnetem Arbeitsmagneten 8 - Magnet - als magnetfelderzeugender Vorrichtung in schematischer Darstellung wiedergegeben. Diese Darstellung zeigt eine bevorzugte Ausgestaltung des magnetoresistiven Sensorelements 7 in einem im wesentlichen quaderförmigen Gehäuse mit vier Anschlußfahnen, welches flach mit dem Arbeitsmagneten 8 verklebt ist. Die Klebefläche ist dabei in der durch die x-Koordinatenachse und die y-Koordinatenachse aufgespannten Ebene ausgerichtet, die z-Koordinatenachse steht dazu senkrecht.

Zur Erzeugung des Magnetfeldes H ist der Arbeitsmagnet 8 in der Weise magnetisiert, daß ohne ferromagnetischen Gegenkörper, der zu einer Ablenkung der Feldlinien führt, am Ort des magnetoresistiven Sensorelements 7 außer der in Richtung der z-Koordinatenachse ausgerichteten Hauptkomponente des Magnetfeldes H auch noch eine hier mit Hₓ bezeichnete Komponente in Richtung der x-Koordinatenachse vorhanden ist, die als Stützfeld bezeichnet wird und der Einstellung der Kennlinie des magnetoresistiven Sensorelements 7 dient. Diese Ausrichtung der Feldlinien des Magnetfeldes H ist sowohl in Fig. 1 als auch in Fig. 3a in verschiedenen räumlichen Ansichten schematisch wiedergegeben. Sie führt zu einem Kennlinienverlauf, der ebenfalls in Fig. 3a schematisch als Diagramm der hier als V_{Out} bezeichneten Ausgangsspannung UA des magnetoresistiven Sensorelements 7 gegenüber dem hier als H_{y} bezeichneten Meßfeld gezeigt ist. Bei (relativ) großer Feldstärke des Stützfeldes Hₓ erhält man im Bereich des Nullpunktes dieses Diagramms einen relativ flachen Kennlinienverlauf, d.h. eine niedrige Steigung der Kennlinie.

Wird dagegen z.B. durch Einbringen eines ferromagnetischen Gegenkörpers (oder durch andere, magnetfeldbeeinflussende Maßnahmen wie z.B. Einbringen eines weiteren magnetisierten Körpers) das Magnetfeld H des Arbeitsmagneten 8 in der Weise verformt, daß sich die Feldlinien im Bereich des magnetoresistiven Sensorelements 7 stärker in Richtung der z-Koordinatenachse ausrichten und damit die in Richtung der x-Koordinatenachse ausgerichtete Feldkomponente des Stützfeldes Hₓ verringert wird, ergeben sich die in Fig. 3b schematisch dargestellten Verhältnisse. Die Verringerung der Feldkomponente des Stützfeldes Hₓ führt auf einen steileren Kennlinienverlauf der Kennlinie der Ausgangsspannung V_{Out} des magnetoresistiven Sensorelements 7 gegenüber dem Meßfeld Hy im Bereich ihres Nullpunktes.

Bei einer Bewegung des Encoders 9 entlang der Bewegungskoordinate Φ tritt somit gegenüber einem ferromagnetischen Gegenkörper, also insbesondere gegenüber einem Zahn des Zahnrades, eine stärkere Veränderung der Ausgangsspannung V_{Out} des magnetoresistiven Sensorelements 7 über der Bewegungskoordinate Φ und damit über der Zeit t, die diese Bewegung benötigt, auf, als dies gegenüber einer Lücke zwischen je zwei Zähnen des Zahnrades der Fall ist.

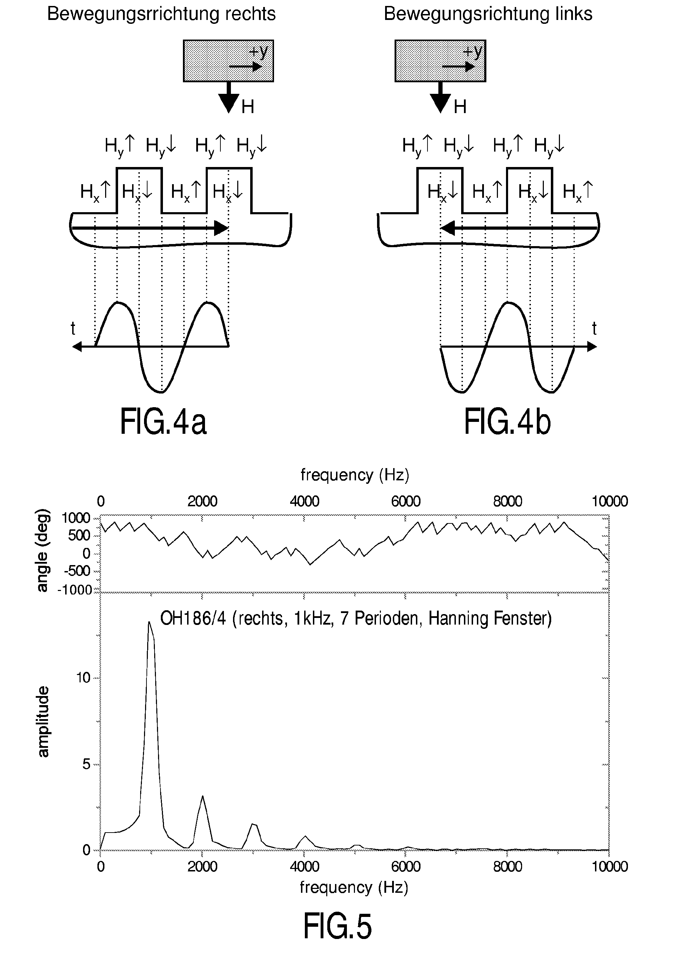

In den Fig. 4a und 4b ist schematisch dargestellt, wie sich diese unterschiedlich starken Veränderungen der Ausgangsspannung V_{Out} des magnetoresistiven Sensorelements 7 über der Bewegungskoordinate Φ und damit über der Zeit t, die diese Bewegung benötigt, auf den zeitlichen Verlauf der Ausgangsspannung V_{Out} des magnetoresistiven Sensorelements 7 in Abhängigkeit von der Richtung der Bewegung entlang der Bewegungskoordinate Φ auswirken. Dabei ist in Fig. 4a eine Bewegungsrichtung angenommen, die in der zeichnerischen Darstellung des zugehörigen Diagramms nach rechts gerichtet ist und durch einen Pfeil im mittleren Teil des Diagramms angedeutet wird. In Fig. 4b ist dagegen eine Bewegungsrichtung angenommen, die in der zeichnerischen Darstellung des Diagramms nach links gerichtet ist und ebenso durch einen Pfeil im mittleren Teil des zugehörigen Diagramms angedeutet wird. Diese mittleren Teile der Diagramme stellen schematisch die zahnradförmige Gestalt des Encoders 9 dar. Die Bereiche entlang der Bewegungskoordinate Φ und damit hier der y-Koordinatenachse, in denen die Feldkomponenten des Stützfeldes Hₓ und des Meßfeldes H_{y} abwechselnd größere oder kleinere Werte annehmen, sind mit den zugeordneten Bezugszeichen Hₓ, H_{y} und daran gezeichneten Pfeilen schematisch gekennzeichnet. Bei einer Bewegungsrichtung gemäß Fig. 4a zeigen im zeitlichen Verlauf der Ausgangsspannung V_{Out} des magnetoresistiven Sensorelements 7 die ansteigenden Flanken eine größere Steigung als die abfallenden Flanken, während bei einer Bewegungsrichtung gemäß Fig. 4b die ansteigenden Flanken im zeitlichen Verlauf der Ausgangsspannung V_{Out} des magnetoresistiven Sensorelements 7 eine geringere Steigung als die abfallenden Flanken zeigen.

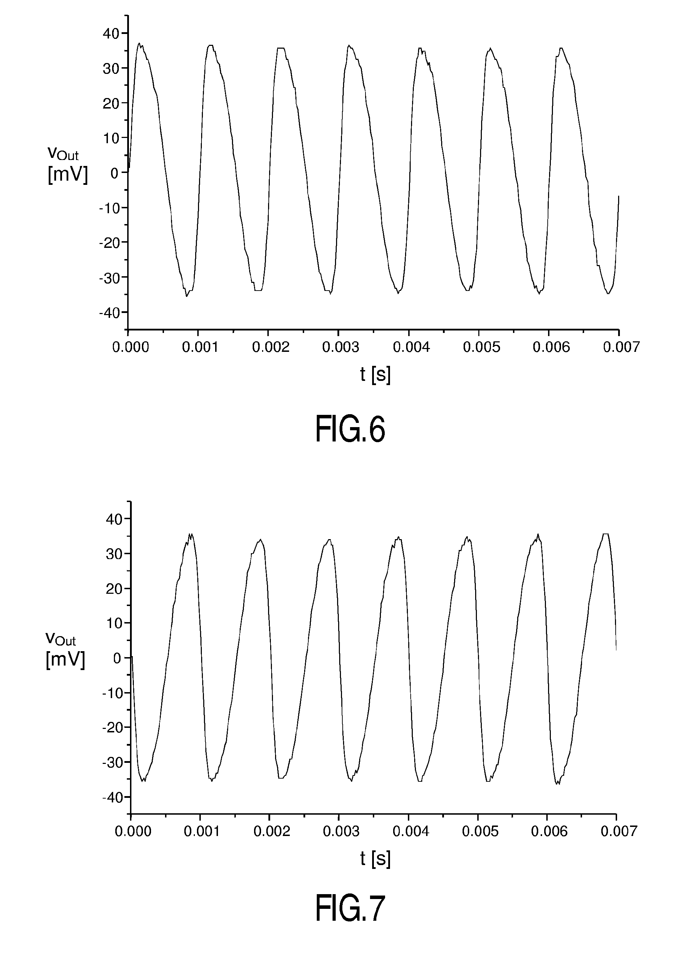

Die Erzeugung unterschiedlicher Steigungen im zeitlichen Verlauf der Ausgangsspannung V_{Out} des magnetoresistiven Sensorelements 7 stellt eine nichtlineare Verzerrung dieser Ausgangsspannung V_{Out} dar, die zur Erzeugung höherfrequenter Anteile im Frequenzspektrum der Ausgangsspannung V_{Out} führen. Diese höherfrequenten Anteile treten im Frequenzspektrum der Ausgangsspannung V_{Out} insbesondere dann deutlich hervor, wenn die Ausgangsspannung V_{Out} eine vorzugsweise wenigstens nahezu sinusförmige Ausgestaltung aufweist. Fig. 5 zeigt eine beispielhafte Darstellung eines solchen Frequenzspektrums der Ausgangsspannung V_{Out} einer erfindungsgemäß ausgestalteten Anordnung, und zwar der Amplitude derartiger höherfrequenter Anteile in beispielhaft angenommenen Skalenteilen im unteren Teil des Diagramms nach Fig. 5 und des Phasenwinkels - "Angle(deg)" - in Winkelgraden im oberen Teil des Diagramms nach Fig. 5, beide aufgetragen über der in Hertz gemessenen Frequenz - "Frequency (Hz)" - der Ausgangsspannung V_{Out} in einem angenommenen Betriebsfall, d.h. für eine angenommene, feste Bewegungsgeschwindigkeit.

Beispiele gemessener Verläufe der Ausgangsspannung V_{Out} in einem angenommenen Betriebsfall zeigen die Diagramme der Fig. 6 und 7. Dabei ist in Fig. 6 eine solche beispielhafte Darstellung eines Verlaufs der Ausgangsspannung V_{Out} einer erfindungsgemäßen Anordnung, aufgetragen über der Zeit t für eine Bewegung des Encoders 9 in einer ersten Bewegungsrichtung - nach rechts in der Darstellung der Fig. 4a - und in Fig. 7 eine solche beispielhafte Darstellung eines Verlaufs der Ausgangsspannung V_{Out} einer erfindungsgemäßen Anordnung, aufgetragen über der Zeit t für eine Bewegung des Encoders in einer zweiten Bewegungsrichtung - nach links in der Darstellung der Fig. 4b - wiedergegeben, wobei die Ausgangsspannung V_{Out} in Millivolt [mV] und die Zeit t in Sekunden [s] gemessen ist. Die Steigungen der Signalflanken dieser gemessenen Ausgangsspannungen V_{Out} in Fig. 6, 7 entsprechen denen der schematischen Darstellungen der Fig. 4a, 4b.

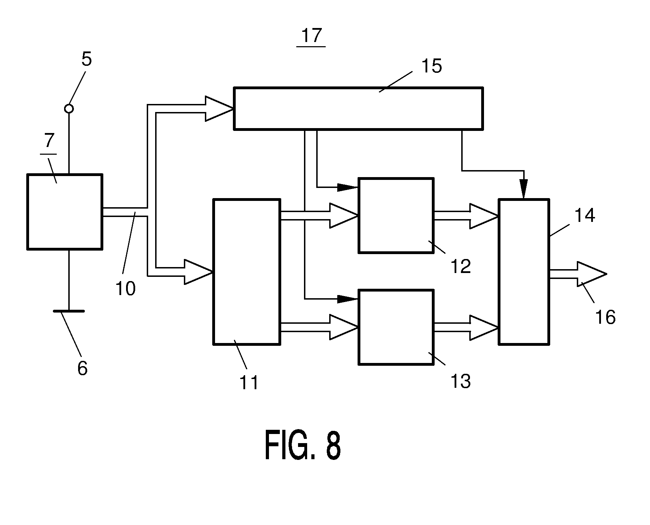

Fig. 8 zeigt in schematischer Darstellung ein Ausführungsbeispiel einer Signalverarbeitungsschaltung 17 zum Detektieren der unterschiedlichen Steigungen aufeinanderfolgender Signalflanken im zeitlichen Verlauf der als Ausgangssignal bzw. Meßsignal vom magnetoresistiven Sensorelement 7 an den Abgriffen 10 der Wheatstone-Brücke abgegebenen Ausgangsspannung UA bzw. V_{Out}. Diese Signalverarbeitungsschaltung 17 umfaßt eine Differentiationsstufe 11, der die Ausgangsspannung UA des magnetoresistiven Sensorelements 7 zugeführt wird und die daraus zumindest im wesentlichen durch Bildung der ersten Ableitung der Ausgangsspannung UA ein die zeitlichen Änderungen der Ausgangsspannung UA darstellendes Steigungssignal erzeugt. Dieses Steigungssignal wird einer ersten und einer zweiten Vergleichseinrichtung 12 bzw. 13 zugeleitet.

Die Ausgangsspannung UA des magnetoresistiven Sensorelements 7 wird von den Abgriffen 10 ferner einer Steuerstufe 15 zugeführt. In der Steuerstufe 15 werdengesteuert durch die zeitlichen Änderungen der Ausgangsspannung UA - Steuersignale für die Vergleichseinrichtungen 12 bzw. 13 erzeugt und diesen zugeführt. Diese Steuersignale steuern die Vergleichseinrichtungen 12 bzw. 13 in der Weise, daß das von der Differentiationsstufe 11 zugeführte Steigungssignal nur innerhalb bestimmter Zeitfenster ausgewertet wird, die nur die zeitlichen Bereiche der ansteigenden und abfallenden Signalflanken der Ausgangsspannung UA des magnetoresistiven Sensorelements 7 enthalten. Bevorzugt sind diese Zeitfenster so bemessen, daß von der ersten Vergleichseinrichtung 12 nur mit der Zeit t ansteigende Signalflanken erfaßt werden, von der zweiten Vergleichseinrichtung 13 dagegen nur mit der Zeit t abfallende Signalflanken. In den Vergleichseinrichtungen 12 bzw. 13 werden die Steigungen der Signalflanken, d.h. die Beträge des Steigungssignals in den vorgegebenen Zeitfenstern, ermittelt und diesen Beträgen entsprechende Signale einer Verknüpfungsstufe 14 zugeführt.

In der Verknüpfungsstufe 14 werden die den Beträgen des Steigungssignals entsprechenden Signale von den Vergleichseinrichtungen 12 bzw. 13 - wieder für jedes der durch die Steuerstufe 15 gesteuerten Zeitfenster - miteinander logisch verknüpft, wobei detektiert wird, ob der Betrag des Steigungssignals für eine ansteigende Signalflanke größer oder kleiner ist als der Betrag des Steigungssignals für eine nachfolgende abfallende Signalflanke. Dem Ergebnis dieser Verknüpfung gemäß wird in der Verknüpfungsstufe 14 ein Bewegungsrichtungssignal erzeugt und über einen Ausgang 16 abgegeben. Auf diese Weise wird das Bewegungsrichtungssignal in Abhängigkeit von den Werten und/oder der Aufeinanderfolge der Werte der Steigungen aufeinanderfolgender Signalflanken bestimmt.

Zusammenfassend und mit anderen Worten ausgedrückt ist die Erfindung bevorzugt in magnetoresistiven Sensoren mit sogenannten Barberpol-Strukturen einsetzbar, die nicht im Bereich der magnetischen Sättigung arbeiten und dabei die durch die relative Bewegung zu dem ferromagnetischen Encoder bewirkte Modulation eines magnetischen Felds detektieren, wobei die Messung der Modulationsfrequenz des elektrischen Ausgangssignals des Sensors bei bekannter Teilung des Encoders die Bestimmung der Geschwindigkeit der Relativbewegung ermöglicht. Durch die erfindungsgemäße Ausbildung des magnetischen Systems werden im Betrieb höherfrequente Anteile des modulierten Ausgangssignales erzeugt, die in Abhängigkeit von der Bewegungsrichtung zu unterschiedlichen Anstiegs- und Abfallszeiten der Signalflanken des modulierten Ausgangssignales führen. Zusätzlich zur Geschwindigkeitsmessung gestattet der Vergleich dieser Zeiten damit die Erfassung der Bewegungsrichtung. Damit läßt sich die erfindungsgemäße Anordnung bevorzugt in ABS-Sensoren und bei der automatischen Steuerung von Feststellbremsen einsetzen.

Bei der Erfindung wird das durch die relative Bewegung des Encoders in Richtung der y-Koordinatenachse zu modulierende Magnetfeld H durch einen Permanentmagneten zur Verfügung gestellt, der in der durch die x-Koordinatenachse und die z-Koordinatenachse aufgespannten x-z-Ebene magnetisiert ist. Gleichzeitig dient die Komponente dieses Magnetfeldes in Richtung der x-Koordinatenachse als Stützfeld der Kennlinieneinstellung des magnetoresistiven Sensors.

Durch die erfindungsgemäße Auslegung der beschriebenen Vorrichtung und ihres magnetischen Kreises ist es möglich, das Magnetfeld H nicht nur in Richtung der y-Koordinatenachse, sondern auch in Richtung der x-Koordinatenachse zu modulieren. Diese Modulation führt zu nichtlinearen Änderungen der Kennlinie des magnetoresistiven Sensors.

Die mit der Bewegung des Encoders veränderlichen Anteile der als Stützfeld Hₓ bzw. Meßfeld H_{y} bezeichneten Komponenten des Magnetfelds H in Richtung der x- bzw. der y-Koordinatenachse sind periodisch und um etwa 90° in der Phase verschobenen und bewirken infolge der Nichtlinearität der Kennlinie des magnetoresistiven Sensors die genannten höherfrequenten Anteile im Spektrum seines Ausgangssignales, die zu den in Abhängigkeit von der Bewegungsrichtung unterschiedlichen Signalanstiegs- undabfallszeiten führen.

Durch die nachfolgende Signalverarbeitung zur Bewertung der Anstiege der Flanken wird die Bestimmung von Betrag und Richtung der relativen Geschwindigkeit zwischen magnetoresistivem Sensor und Encoder ermöglicht.

### BEZUGSZEICHENLISTE

- 1: Erster Brückenzweig des magnetoresistiven Sensorelements 7
- 2: Zweiter Brückenzweig des magnetoresistiven Sensorelements 7
- 3: Dritter Brückenzweig des magnetoresistiven Sensorelements 7
- 4: Vierter Brückenzweig des magnetoresistiven Sensorelements 7
- 5: Erster Speisespannungsanschluß (für erstes Speisespannungspotential UB)
- 6: Zweiter Speisespannungsanschluß (für Massepotential M)
- 7: Als Wheatstone-Brücke ausgebildetes magnetoresistives Sensorelement
- 8: Arbeitsmagnet
- 9: Rotierender Encoder
- 10: Abgriffe des Sensorelements 7 für das Ausgangssignal UA bzw. V_{Out}
- 11: Differentiationsstufe
- 12: Erste Vergleichseinrichtung
- 13: Zweite Vergleichseinrichtung
- 14: Verknüpfungsstufe 14
- 15: Steuerstufe
- 16: Ausgang für ein Bewegungsrichtungssignal
- 17: Signalverarbeitungsschaltung
- H: Magnetfeld des Arbeitsmagneten 8
- Hₓ: Stützfeld = Komponente des Magnetfelds H in Richtung der x-Koordinatenachse
- H_{y}: Meßfeld = Komponente des Magnetfelds H in Richtung der y-Koordinatenachse
- M: Zweites Speisespannungspotential ( = Massepotential)
- t: Zeit
- UA: Ausgangssignal des Sensorelements 7 (= Meßsignal = Ausgangsspannung)
- UB: Erstes Speisespannungspotential
- V_{Out}: Ausgangssignal des Sensorelements 7 (= Meßsignal = Ausgangsspannung)
- x: Koordinatenachse
- y: Koordinatenachse
- z: Koordinatenachse
- Φ: Bewegungskoordinate des rotierenden Encoders 9

## Patentansprüche

1. Anordnung zum Detektieren der Bewegung eines Encoders, der entlang einer Hauptfläche, die zumindest im wesentlichen durch eine zweite, in Bewegungsrichtung des Encoders ausgerichtete räumliche Koordinate sowie eine zumindest im wesentlichen senkrecht zur Bewegungsrichtung des Encoders ausgerichtete erste räumliche Koordinate aufgespannt ist, angeordnete, magnetisch wirksame Bereiche aufweist, die entlang der zweiten räumlichen Koordinate in vorgegebener Folge unterteilt sind, mit einem in Richtung einer zumindest im wesentlichen senkrecht zur Hauptfläche des Encoders ausgerichteten dritten räumlichen Koordinate vor der Hauptfläche des Encoders angeordneten magnetoresistiven Sensorelement und einer magnetfelderzeugenden Vorrichtung zum Erzeugen eines Magnetfeldes, welches das magnetoresistive Sensorelement mit Feldlinien durchsetzt, die zumindest im wesentlichen in einer durch die erste und die dritte räumliche Koordinate aufgespannten Ebene ausgerichtet sind, wobei die Anordnung eingerichtet ist zum Erzeugen einer von der Position des Encoders gegenüber dem magnetoresistiven Sensorelement und der magnetfelderzeugenden Vorrichtung bestimmten Ablenkung der Feldlinien des von der magnetfelderzeugenden Vorrichtung erzeugten Magnetfeldes in Richtung der zweiten räumlichen Koordinate mit einer durch die vorgegebene Folge der magnetisch wirksamen Bereiche bestimmten periodischen Wiederholung und zum Abgeben eines vom magnetoresistiven Sensorelement aufgrund der Beeinflussung durch diese Ablenkung der Feldlinien hervorgerufenen, mit der genannten periodischen Wiederholung steigende und fallende Signalflanken aufweisenden Ausgangssignals, und wobei die Anordnung weiterhin eingerichtet ist zum Erzeugen einer ebenfalls von der Position des Encoders bestimmten Ablenkung der Feldlinien des Magnetfeldes auch in Richtung der ersten räumlichen Koordinate in der genannten periodischen Wiederholung, mit einer Signalverarbeitungsschaltung zum Detektieren der Steigungen aufeinanderfolgender Signalflanken im Ausgangssignal und Abgeben eines Bewegungsrichtungssignals in Abhängigkeit von den Werten und/oder der Aufeinanderfolge der Werte der Steigungen aufeinanderfolgender Signalflanken.
